# EUROPEAN PATENT APPLICATION

(11) **EP 4 738 991 A1**
(43) Date of publication of application: **06.05.2026**
(21) Application number: 25212460.7
(22) Date of filing: 30.10.2025
(51) Int. Cl.: H05B 6/06

(54) **CONTROL SYSTEM FOR INDUCTION HEATING**

(30) Priority: 31.10.2024 US 202418933384
(71) Applicant: Whirlpool Corporation, Benton Harbor, MI 49022 (US)
(72) Inventor: Barbati, Mario, Benton Harbor, 49022 (US); Baldo, Salvatore, Benton Harbor, 49022 (US); Gallivanoni, Andrea, Benton Harbor, 49022 (US)
(74) Representative: Witte, Weller & Partner Patentanwälte mbB

(57) **Abstract**

A system for controlling an induction cooking apparatus includes resonant loads each having an induction coil of said induction cooking apparatus, switching circuitry including a shared half-bridge, and a plurality of secondary half-bridges each cooperating with the shared half-bridge to form a plurality of full-bridge inverters. Control circuitry is configured to determine a plurality of target power levels including a target power level for each one of the plurality of resonant loads, calculate a switching frequency common to the shared half-bridge and the plurality of secondary half-bridges based on the comparison of the target levels, generate a plurality of control signals each for application to a half-bridge of the plurality of secondary half-bridges, calculate a phase displacement for each of the plurality of control signals, and determine a maximum current through the shared half-bridge independent of an orientation of the phase displacement for each of the plurality of control signals.

## Description

### BACKGROUND OF THE DISCLOSURE

The present disclosure generally relates to control of induction heating and, more specifically, to controlling activation signals for inverters of an induction heating system.

### SUMMARY OF THE DISCLOSURE

According to one aspect of the present disclosure, a system for controlling an induction cooking apparatus includes a plurality of resonant loads each having an induction coil of said induction cooking apparatus, switching circuitry including a shared half-bridge, and a plurality of secondary half-bridges each cooperating with the shared half-bridge to form a plurality of full-bridge inverters. Each of the plurality of full-bridge inverters is configured to selectively power a resonant load of the plurality of resonant loads. Control circuitry is configured to determine a plurality of target power levels including a target power level for each one of the plurality of resonant loads, compare the plurality of target power levels, calculate a switching frequency common to the shared half-bridge and the plurality of secondary half-bridges based on the comparison of the target levels, generate a plurality of control signals each for application to a half-bridge of the plurality of secondary half-bridges, calculate a phase displacement for each of the plurality of control signals, determine a maximum current through the shared half-bridge independent of an orientation of the phase displacement for each of the plurality of control signals, and adjust the orientation of the phase displacement for each of the plurality of control signals to reduce the maximum current.

According to another aspect of the present disclosure, a system for controlling an induction cooking apparatus includes a plurality of resonant loads each having an induction coil of said induction cooking apparatus, switching circuitry including a shared half-bridge, and a plurality of secondary half-bridges each cooperating with the shared half-bridge to selectively power a resonant load of the plurality of resonant loads. Control circuitry is configured to calculate a switching frequency common to the shared half-bridge and the plurality of secondary half-bridges, generate a plurality of control signals each for application to a half-bridge of the plurality of secondary half-bridges, calculate a phase displacement for each of the plurality of control signals, determine a maximum current through the half-bridge independent of an orientation of the phase displacement for each of the plurality of control signals, and adjust the orientation of the phase displacement for each of the plurality of control signals to reduce the maximum current.

According to yet another aspect of the present disclosure, a system for controlling an induction cooking apparatus includes a plurality of resonant loads each having an induction coil of said induction cooking apparatus, switching circuitry including a shared half-bridge, and a plurality of secondary half-bridges each cooperating with the shared half-bridge to form a plurality of full-bridge inverters, wherein each of the plurality of full-bridge inverters is configured to selectively power a resonant load of the plurality of resonant loads. Control circuitry is configured to calculate a switching frequency common to the shared half-bridge and the plurality of secondary half-bridges, generate a plurality of control signals each for application to a half-bridge of the plurality of secondary half-bridges, calculate a phase displacement for each of the plurality of control signals, determine a maximum current through the half-bridge independent of an orientation of the phase displacement for each of the plurality of control signals, and adjust the orientation of the phase displacement for each of the plurality of control signals to reduce the maximum current.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a top-perspective view of an induction cooktop;
FIG. 2 is a simplified block diagram schematic of a heating circuit for an induction cooking apparatus;
FIG. 3 is a detailed electrical schematic of a heating circuit for an induction cooking apparatus;
FIG. 4 is a timing diagram of activation signals, voltages, and currents for a heating circuit with phase displacements applied for controlling power output;
FIG. 5 is a timing diagram of activation signals, voltages, and currents for a heating circuit with phase displacements and phase orientations adjusted for controlling power output; and
FIG. 6 is a flow diagram of a method for controlling an induction cooking apparatus according to one aspect of the present disclosure.

The components in the figures are not necessarily to scale, emphasis instead being placed upon illustrating the principles described herein.

### DETAILED DESCRIPTION

The present illustrated embodiments reside primarily in combinations of method steps and apparatus components related to a system for controlling an induction cooking apparatus. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . . " does not, without more constraints, preclude the existence of additional identical elements in the process, method, article, or apparatus that comprises the element.

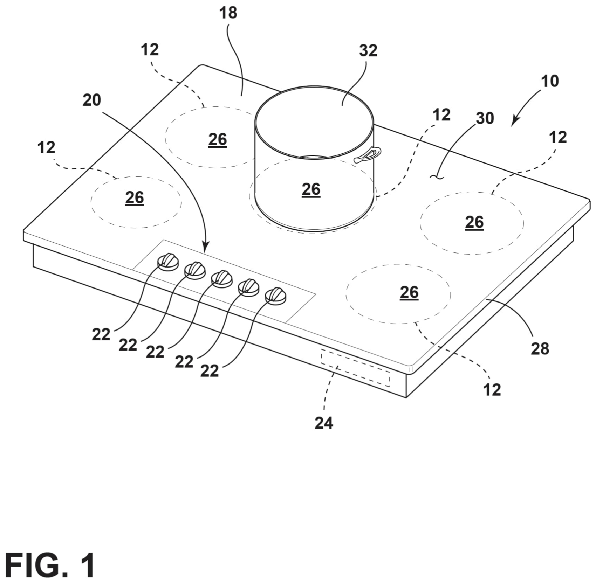

Referring to FIGS. 1-6, reference numeral 10 generally designates an induction cooking apparatus 10. A system for controlling the induction cooking apparatus 10 includes a plurality of resonant loads 11 each having an induction coil 12 of the induction cooking apparatus 10. The system includes switching circuitry 13 including a shared half-bridge 14 and a plurality of secondary half-bridges 16 each cooperating with the shared half-bridge 14 to form a plurality of full-bridge inverters. Each of the plurality of full-bridge inverters is configured to selectively power a resonant load of the plurality of resonant loads 11. Control circuitry is configured to determine a plurality of target power levels including a target power level for each one of the plurality of resonant loads, compare the plurality of target power levels, calculate a switching frequency common to the shared half-bridge 14 and the plurality of secondary half-bridges 16 based on the comparison of the target levels, generate a plurality of control signals each for application to a half-bridge of the plurality of secondary half-bridges 16, calculate a phase displacement for each of the plurality of control signals, determine a maximum current drawn by the plurality of resonant loads independent of an orientation of the phase displacement for each of the plurality of control signals, and adjust the orientation of the phase displacement for each of the plurality of control signals to reduce the maximum current.

With continued reference to FIGS. 1-6, the system can generally provide for enhanced power efficiency by limiting current peaks. The power management can be achieved by employing the common switching frequency among the switching circuitry 13 and shifting the phase of each control signal to achieve a power level commensurate with a desired cooking temperature or heat level. The shifting of the phase includes both applying a magnitude (e.g., the phase displacement) and a direction, or timing (e.g., the orientation) for each control signal. Thus, the system can determine which control signals to shift ahead of or behind the common switching frequency to achieve not only the desired temperature output but also to limit current levels. This can allow for lower-rated electrical equipment and for use of a "shared-inverter" topology of the switching circuitry 13, thereby providing cost efficiency and potentially reducing heat.

Referring now to FIG. 1, the induction cooking apparatus 10 may include a cooking hob or be in the form of an induction cooking appliance. The induction cooking apparatus 10 can include a cooking area 18 and a control interface 20 which may include knobs 22 and/or touch interfaces for controlling the induction cooking apparatus 10. For example, a controller 24 may be provided within the induction cooking apparatus 10 assembly for controlling power to one or more of the coils 12 of the induction cooking apparatus 10 to achieve one or more target temperatures or heat levels for one or more cooking zones 26 of the induction cooking apparatus 10. A glass layer 28, or insulating layer, may form a cooking surface 30 and provide space between the coils 12 in the induction cooking apparatus 10 and the cooking surface 30.

The induction cooking apparatus 10 is operable with different types of cookware 32. For example, pots and pans having different shapes, material compositions, sizes, etc. can be heated via induction heating from the coils 12. Depending on the type of the cookware 32 used, the electrical power drawn by the coil/applied to the cookware 32 differs. As will be described further herein, the control circuitry can detect power drawn by the coils 12 and, therefore, identify the type of cookware 32 used and/or the range of power levels attainable by the cookware 32 for a given frequency range.

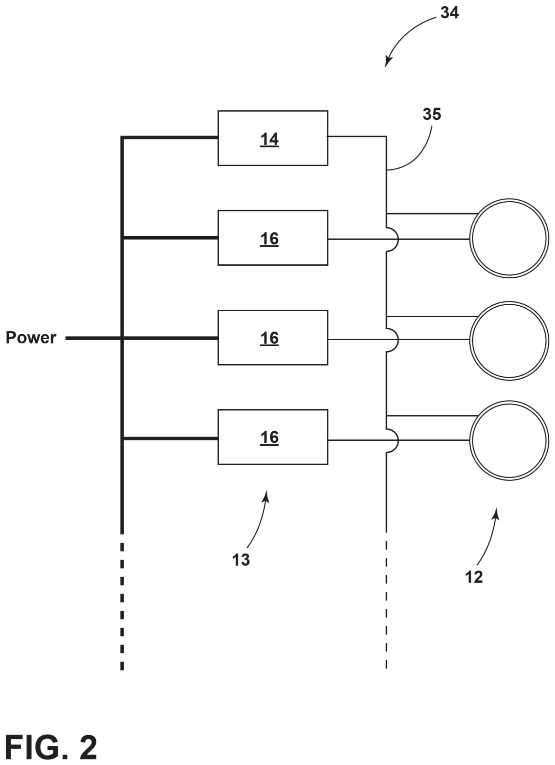

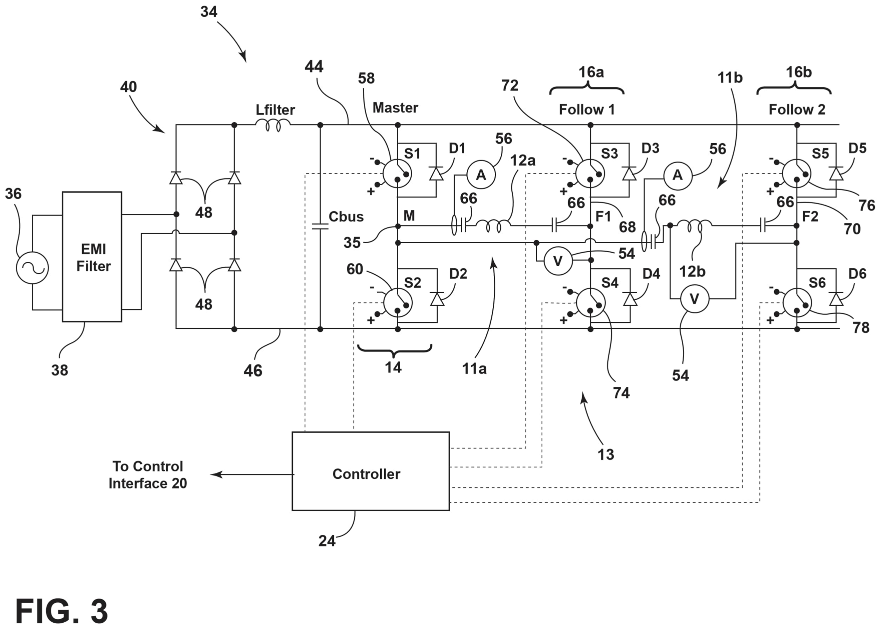

Referring now to FIG. 2, a simplified diagram of a heating circuit 34 having a shared-inverter topology. The shared-inverter topology generally provides the shared half-bridge 14 electrically connected with one end of each of the plurality of induction coils 12 via a shared intermediate node 35, and one of the plurality of secondary half-bridges 16 connected to another end of a given one of the plurality of induction coils 12. Thus, to achieve different power levels among the plurality of resonant loads 11, the system of the present disclosure controls activation and deactivation signals individually for each of the plurality of secondary half-bridges 16 and the shared bridge 14. It is contemplated that this topology can support any number of the resonant loads 11 with the addition of one secondary half-bridge 16 per coil 12, though the foregoing examples presented in FIGS. 3-5 will be in reference to an example of two coils 12a, 12b with two resonant loads 11a, 11b, respectively, as well as two half-bridges 16a, 16b that each cooperate with the shared half-bridge 14 to form two full-bridge inverters.

Referring now to FIG. 3, a heating circuit 34 is provided in reference to two exemplary coils 12 (i.e., a first coil 12a and a second coil 12b), though any number of coils 12 may be managed by the heating circuit 34. The heating circuit 34 may be powered via main power 36, which may be an alternating-current (AC) voltage. For example, the main power 36 may include 110 VAC,115VAC, 120VAC, 230VAC, 240VAC, 480VAC, or another AC signal typically provided for residential or commercial power distribution. The frequency of the main power 36 may be 50Hz, 60Hz. An electromagnetic interference (EMI) filter 38 is provided for reducing electromagnetic interference generated during high-frequency operation of the induction cooking apparatus 10. This filter typically includes capacitors and inductors arranged to suppress unwanted electromagnetic radiation.

Filtered power is provided to a rectifier 40 that converts alternating current (AC) power to direct current (DC) power provided along a DC bus that includes a positive node 44 and a negative node 46. The rectifier 40 can include one or more rectifier diodes 48. One or more capacitors can be connected to the DC bus to smooth the DC voltage. Usually, a differential mode choke is connected between the rectifier 40 and the DC bus capacitors to form a filter together with the capacitors, to further filter and smooth the DC voltage.

The switching circuitry 13 is downstream of the rectifier 40 and is powered by the DC bus. For example, the shared half-bridge 14 and the plurality of secondary half-bridges 16 are electrically coupled with the DC bus. Each half-bridge 14, 16 can be a half-bridge inverter. As demonstrated, for two coils 12a, 12b, the heating circuit 34 can include three half-bridges 14, 16a, 16b. For example, there may be a first full-bridge inverter that includes a first half-bridge 16a and the shared half-bridge 14 that are arranged to control current through the first coil 12a. A second full-bridge inverter includes a second half-bridge 16b and the shared half-bridge 14 for controlling current through the second coil 12b. Stated differently, the shared half-bridge 14 is common to the first full-bridge inverter and the second full-bridge inverter.

Although two coils 12 and two full-bridge inverters are shown in the present example, it is contemplated that the shared half-bridge 14 may be common to any number of full-bridge inverters that power a specific coil. For example, if five coils 12 are provided for the induction cooking apparatus 10, a total of six half-bridges may be provided (e.g., one shared half-bridge 14 and five individual half-bridges 16 corresponding to the individual coils 12). The shared half-bridge 14 may be referred to as a master inverter, or primary inverter, and the first and second half-bridges 16a, 16b may be referred to as slave inverters, or secondary inverters 16a, 16b.

With continued reference to FIG. 3, the control circuitry is provided for controlling the half-bridges 14, 16a, 16b. For example, the controller 24 can control each half-bridges 14, 16a, 16b. The controller 24 can include a processor and a memory. The memory stores instructions that, when executed by the processor, cause the controller 24 to perform various steps related to electrical activation and electrical sensing. For example, the controller 24 can be in communication with the control interface 20 for detecting one or more target power levels (e.g., temperatures, setpoints, heating levels,) for the cooking zones 26 of the induction cooking apparatus 10 and, in response, the controller 24 can communicate activation signals to the switching circuitry 13 to cause the coil(s) to induce eddy currents in the cookware 32, thereby achieving the one or more power levels. The controller 24 may also monitor feedback from the switching circuitry 13, such as voltages applied to or currents flowing through the coils 12. For example, the control circuitry may monitor a voltage across and a current through each coil 12a, 12b via a voltage sensor 54 (e.g., a voltage divider) and a current sensor 56 (e.g., an ammeter), respectively. Other current-sensing or voltage-sensing devices may be employed. Further, feedback voltages or currents measured at other nodes of the heating circuit 34 may be monitored by the control circuitry.

The control circuitry can control the switching circuitry 13 by communicating control signals to the half-bridges 14, 16a, 16b. For example, the shared half-bridge 14 can include a first switch 58 in series with a second switch 60 via the shared intermediate node 35. The first switch 58 interposes the positive node 44 of the DC bus and the shared intermediate node 35. The second switch 60 interposes the negative node 46 of the DC bus and the shared intermediate node 35. Each coil 12a, 12b is electrically coupled with the shared intermediate node 35 and, along with the cookware 32 above the corresponding coil 12a, 12b, forms the first resonant load 11a and the second resonant load 11b, respectively.

Each of the resonant loads 11a, 11b includes a series resonant circuit having an inductor and at least one capacitor 66. The value of the resistance is the electrical resistance value offered by the corresponding coil 12a, 12b together with the cookware 32 above the given coil 12a, 12b at a given working frequency. The resistance therefore depends on the given coil 12, the cookware 32, and the distance between them. Moreover, due to the skin effect, the resistance also depends on the frequency. Being a resonant network, the total impedance depends on the operating frequency. In particular, there will be a resonance frequency in which the impedance will be resistive (e.g., a condition in which the power transferred to the cookware 32 is maximum). As the working frequency varies, the impedance can be more inductive (frequencies greater than the resonance frequency) or more capacitive (frequencies lower than the resonance frequency). To achieve the maximum power delivery to the cookware 32, the switching circuitry 13 operates at frequencies near resonance, whereas operating at higher frequencies provides a lower power delivery.

With continued reference to FIG. 3, the first full-bridge inverter can include a first intermediate node 68 and the second full-bridge inverter can include a second intermediate node 70. The first half-bridge 16a includes a third switch 72 that interposes the positive node 44 and the first intermediate node 68 and a fourth switch 74 that interposes the negative node 46 and the first intermediate node 68. Similarly, the second full-bridge inverter includes a fifth switch 76 that interposes the positive node 44 and the second intermediate node 70 and a sixth switch 78 that interposes the negative node 46 and the second intermediate node 70. The switches 58, 60, 72, 74, 76, 78 may include transistors or other switching devices. In some examples, the transistors are insulated-gate bipolar transistors (IGBTs).

An antiparallel diode D1, D2, D3, D4, D5, D6 can be provided for each switch 58, 60, 72, 74, 76, 78. For example, diode D1 can be in an antiparallel connection between the collector and emitter of the first switch 58 (e.g., transistor), diode D2 can be in an antiparallel connection between the collector and the emitter of the second switch 60 (e.g., transistor), and so on. Each antiparallel diode D1, D2, D3, D4, D5, D6 can provide an alternate current path for freewheeling current during current polarity switches through the loads 11.

In general, the switching circuitry 13 is controlled to produce alternating currents through the coils 12. By way of example, the first full-bridge inverter controls power to the first coil 12a by selectively activating the a primary high-side switch (e.g., the first switch 58), a primary low-side switch (e.g., the second switch 60), the third switch 72, and the fourth switch 74 in a specific pattern. For example, the first switch 58 and the fourth switch 74 can be activated at the same time to cause current to flow through the first load 11a. The first switch 58 and the fourth switch 74 can then be deactivated, then the second switch 60 and the third switch 72 can be activated to cause current to flow through the first load 11a in an opposite direction than when the first switch 58 and the fourth switch 74 are activated.

With continued reference to FIG. 3, the controller 24 is configured to communicate activation signals to the switching circuitry 13 at a common switching frequency. Stated differently, each switch in use (e.g., each switch used to achieve the target power level of a cooking zone 26) can be activated or deactivated at the same frequency. However, the activation signals can be communicated at different times, or phases. For example, each of the first-sixth switches 58, 60, 72, 74, 76, 78 can be activated at a frequency of 100 kilo-Hertz (kHz). This common frequency can be changed by the control circuitry, though the switching frequency will nonetheless remain the same for all of the switches. By maintaining the same switching frequency, electrical or audible noise typically generated by unequal switching frequencies can be limited. To independently control current through the first coil 12a relative to current through the second coil 12b while maintaining the common switching frequency, the control circuitry is configured to phase shift the activation signals to the switches and/or adjust the common switching frequency.

The present arrangement can provide greater flexibility of control relative to other arrangements. For example, single-ended quasi-resonant arrangements are very complex to control and, due to the high working voltages, can be subject to a high rate of device failure/damage. Further, the controllability range of the power on the cookware 32 can be very narrow relative to the present arrangement, thereby forcing the inverter(s) to work in ON/OFF mode when low power levels are requested by the user or otherwise set as a target power level. For example, if a target power level is 100 Watts (W) and the minimum power achievable is 700 W, the system must operate in the ON/OFF mode, in which 700 W is supplied for a short time (ON phase) and for the remaining time the inverter is kept OFF to obtain an average power delivery of 100 W. During the OFF phase in which there is no power delivery, the DCBUS capacitors are charged at the peak of rectified mains line voltage. When the ON phase is again applied, an acoustic noise (e.g., a ticking noise) can be generated due to the discharge of the DCBUS capacitors at the peak rectified mains line voltage. Further, during the quick discharge of the DCBUS capacitors, a large amount of power is dissipated (high hard-switching), thereby resulting in thermal inefficiencies that can cause stress on the system and cause undesired temperatures in or around the induction cooking apparatus 10.

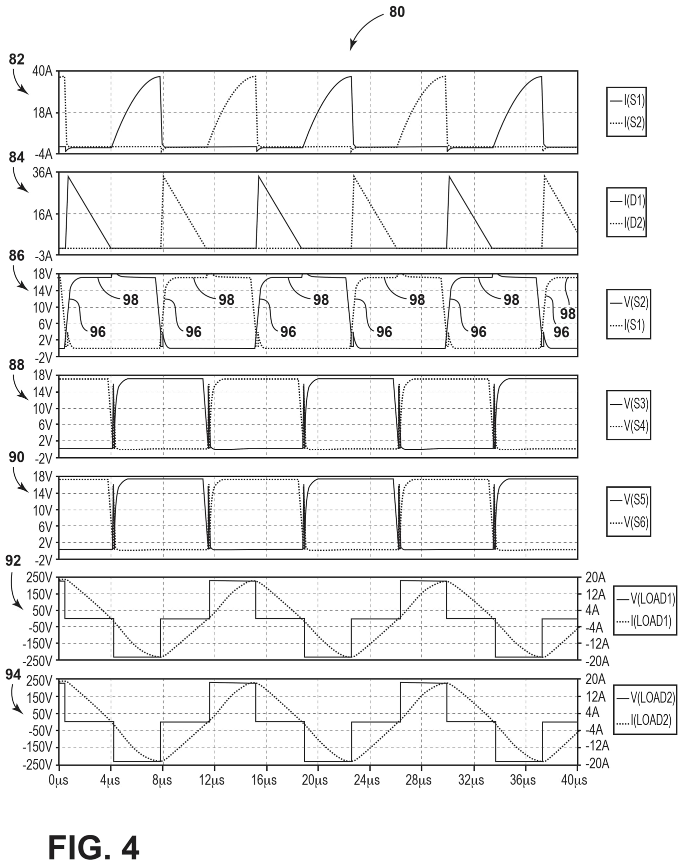

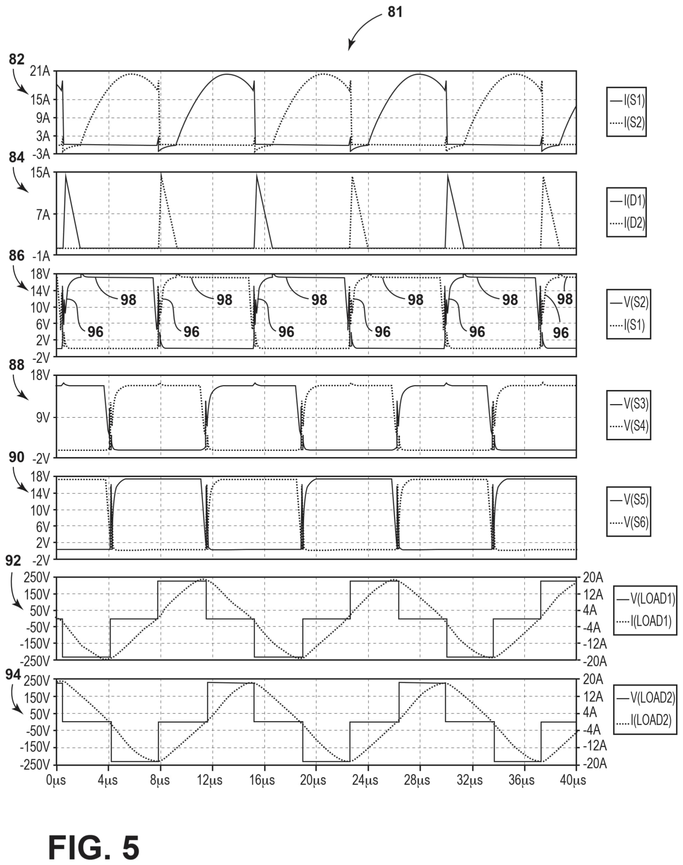

Referring now to FIGS. 4 and 5, in addition to controlling a phase displacement for the control signal to each induction coil 12, the control circuitry can further generate, or select, an orientation pattern that minimizes current peaks, as demonstrated in differences between a first timing diagram 80 (FIG. 4) and a second timing diagram 81 (FIG. 5). As shown in a first plot 82 of the timing diagrams 80, 81, the overall peak current drawn by the shared half-bridge 14 is higher in the example of FIG. 4 than the peak current drawn by the heating circuitry 34 of FIG. 5, despite the same target power levels in either example. As will be demonstrated herein, the reduction in peak current is due to phase orientation adjustment among the control signals, which can be part of a broader orientation pattern. The orientation pattern can be a series of forward and rearward shifts for each control signal. For example, in the case of three coils 12 operating at various power levels, the control circuitry can first determine the common switching frequency using the highest power level, then, or contemporaneously, the control circuitry can determine phase shifts for each signal, then, or contemporaneously, the control circuitry can select one combination, or pattern, of three orientations to apply to the control signals. The pattern can be selected from all possible combinations or a subset of all possible combinations. By way of example, three target different power levels can be requested for three individual coils 12. With no change in phase orientations (e.g., all shifts backward or all shifts forward), the heating circuit 34 could experience a current peak higher than a current peak using another combination (one phase displacement rearward, and two phase displacement forward). Thus, the phase orientation, in addition to the phase displacement, can affect the peak current drawn by the heating circuit 34.

With continued reference to FIGS. 4 and 5, the plots 82-94 are based on the following operating parameters:

Power delivered: 1.4 kilo-Watts (kW);

Resistance of each coil 12a, 12b and corresponding cookware 32: 9.5 ohm;

Inductance of each coil 12a, 12b and corresponding cookware 32: 50 micro-Henries (uH); and

Switching frequency: 68kHz.

The first plot 82 presents current drawn by the shared half-bridge 14 over time. A second plot 84 demonstrates current through the antiparallel diodes D1, D2 paired with the first switch 58 and the second switch 60, respectively, over time. A third plot 86 demonstrates control signals applied to the switches 58, 60 of the shared half-bridge 14 over time. A fourth plot 88 demonstrates control signals applied to the switches 72, 74 of the first half-bridge 16a over time. A fifth plot 90 demonstrates control signals applied to the switches 76, 78 of the second half-bridge 16b over time. A sixth plot 92 demonstrates a current through the first coil 12a overlaying a voltage across the first coil 12a over time. A seventh plot 94 demonstrates a current through the second coil 12b overlaying a voltage across the second coil 12b over time.

As illustrated in the third, fourth, and fifth plots 86-90 of FIGS. 4 and 5, the switching frequency for the half-bridges 14, 16a, 16b can be carried out in the form of pulse-width modulated (PWM) signals that cause an alternating-current (AC) to be applied to the coils 12a, 12b (see the sixth and seventh plots 92, 94). The phase displacements can be implemented relative to a rising edge 96 of each pulse 98 of the switching frequency of the shared half-bridge 14, with a time-shift forward (following) or a time-shift backward (leading) orientation. With specific reference to the fourth and fifth plots 88, 90 of FIG. 4, it can be seen that the high-side switch 72, 76 of each of the first half-bridge 16a and the second half-bridge 16b (e.g., secondary high-side switches), respectively, are on during the same duration, and the low-side switch 74, 78 of each of the first half-bridge 16a and the second half-bridge 16b (e.g., secondary low-side switches), respectively, are on during the same duration. Thus, while the two target power levels are achieved at the common switching frequency using phase displacement, the orientation of each phase displacement is the same. Because the phase orientations match, or at least partially overlap, the resulting voltage and current applied to the first and second coils 12a, 12b are in-phase (see the sixth and seventh plots 92, 94 of FIG. 4). As a result, the currents are additive, and as can be seen in the first plot 82 of FIG. 4, a maximum current nearly reaches 40 amperes.

To limit the additive effect of the currents, and thereby limit peak current, the phase orientations of the control signals can be adjusted by the control circuitry, as shown in FIG. 5. Referring to the third, fourth, and fifth plots 86-90 of FIG. 5, it can be seen that the high-side switch 72 of the first half-bridge 16a is on for the same duration the low-side switch 78 of the second half-bridge 16b is on, and the low-side switch 74 of the first half-bridge 16a is on for the same duration as the high-side switch 76 of the second half-bridge 16b is on. Thus, while the phase displacement in either example (FIG. 4 or FIG. 5) is 50% (e.g., the slave control signals overlap the master control signals by half), the peak current in the example of FIG. 4 is greater than that of FIG. 5 (about 24 amperes).

The phase displacement can be an absolute value represented as a percentage or a number of degrees between -180 and 180 degrees, with 0 degrees corresponding to no phase displacement (e.g., the control signal for the shared half-bridge 14). The timing of the currents through the coils 12a, 12b may also be referred to as a degree of phase overlap or a percentage. By way of example, the currents through the coils 12a, 12b in the example of FIG. 4 are 100% in-phase relative to one another, or each phase shifted by the same value relative to the control signal of the share half-bridge 14 (e.g., 90 degrees).

As previously described, the example of two coils 12a, 12b is merely exemplary and nonlimiting. The control system and method can support any number of coils 12 to minimize peak current. For example, in a more-complex arrangement of 8 coils 12 operated simultaneously, the control circuitry can calculate the base frequency (e.g., the frequency corresponding to the highest target power) and determine the phase displacements for each control signal to attain each target power level. The phase orientation pattern can then be selected by the control circuitry via, for example, access to a look-up table stored in memory, or via any other calculation to determine the optimal arrangement to limit peak current. Once the phase orientation pattern is selected, the control circuitry can adjust the control signals by the orientations and phase displacements and apply the adjusted control signals.

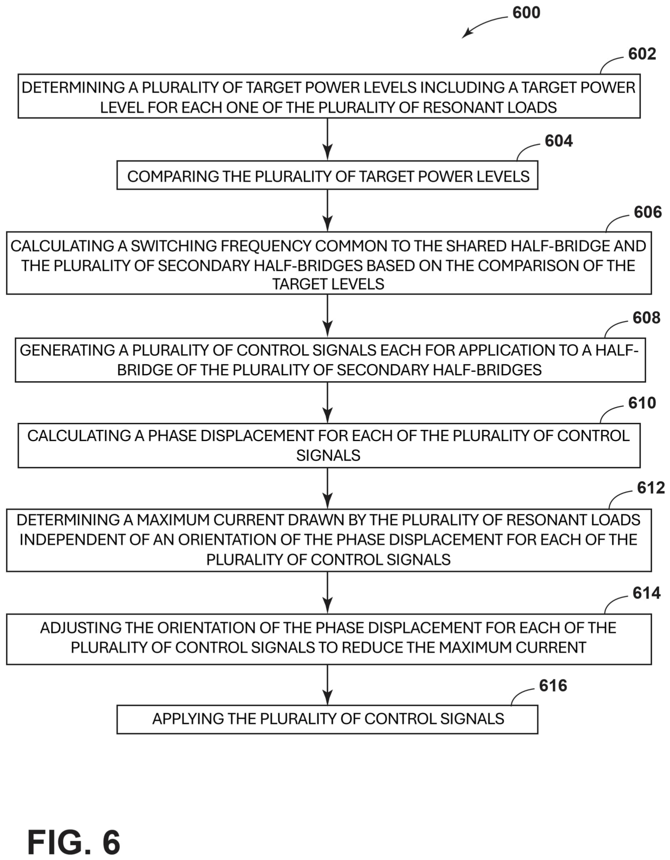

Referring now to FIG. 6, a method 600 for controlling an induction cooking apparatus 10 includes determining a plurality of target power levels including a target power level for each one of the plurality of resonant loads 11 at step 602, comparing the plurality of target power levels at step 604, calculating a switching frequency common to the shared half-bridge 14 and the plurality of secondary half-bridges 16 based on the comparison of the target levels at step 606, generating a plurality of control signals each for application to a half-bridge of the plurality of secondary half-bridges 16 at step 608, calculating a phase displacement for each of the plurality of control signals at step 610, determining a maximum current drawn by the plurality of resonant loads 11 independent of an orientation of the phase displacement for each of the plurality of control signals at step 612, adjusting the orientation of the phase displacement for each of the plurality of control signals to reduce the maximum current at step 614, and applying the plurality of control signals at step 616.

According to one aspect of the present disclosure, a system for controlling an induction cooking apparatus includes a plurality of resonant loads each having an induction coil of said induction cooking apparatus, switching circuitry including a shared half-bridge, and a plurality of secondary half-bridges each cooperating with the shared half-bridge to form a plurality of full-bridge inverters, wherein each of the plurality of full-bridge inverters is configured to selectively power a resonant load of the plurality of resonant loads. Control circuitry configured is to determine a plurality of target power levels including a target power level for each one of the plurality of resonant loads, compare the plurality of target power levels, calculate a switching frequency common to the shared half-bridge and the plurality of secondary half-bridges based on the comparison of the target levels, generate a plurality of control signals each for application to a half-bridge of the plurality of secondary half-bridges, calculate a phase displacement for each of the plurality of control signals, determine a maximum current through the shared half-bridge independent of an orientation of the phase displacement for each of the plurality of control signals, and adjust the orientation of the phase displacement for each of the plurality of control signals to reduce the maximum current.

According to one aspect, each control signal is a pulse-width modulated (PWM) signal representative of the switching frequency, wherein the PWM signal for the shared half-bridge defines a rising edge of a pulse of the PWM signal to the shared half-bridge.

According to one aspect, the orientation includes one of a time-shift ahead and a time-shift delay from the rising edge.

According to one aspect, the plurality of resonant loads is a first resonant load and a second resonant load, and the control circuitry is configured to shift a first control signal ahead of the rising edge and a second control signal behind the rising edge.

According to one aspect, the plurality of secondary half-bridges is a first half-bridge and a second half-bridge each including a high-side secondary switch and a low-side secondary switch, and the shared half-bridge includes a primary high-side switch and a primary low-side switch.

According to one aspect, the secondary switches are IGBTs and the control circuitry includes a controller that controls the IGBTs via the control signals to adjust the orientation of at least some of the phase displacements.

According to one aspect, the control circuitry is configured to select from a plurality of orientation patterns a target orientation pattern for the plurality of control signals to provide a lowest current peak to achieve the plurality of target power levels at the switching frequency.

According to one aspect, a shared node electrically connecting each of the plurality of resonant loads to the shared half-bridge.

According to one aspect, calculation of the switching frequency includes identifying an operating frequency for the highest target power level and assigning the operating frequency to the switching frequency.

According to one aspect, the control circuitry is configured to apply the plurality of control signals.

According to one aspect, a system for controlling an induction cooking apparatus includes a plurality of resonant loads each having an induction coil of said induction cooking apparatus, switching circuitry including a shared half-bridge, and a plurality of secondary half-bridges each cooperating with the shared half-bridge to selectively power a resonant load of the plurality of resonant loads. Control circuitry configured is to calculate a switching frequency common to the shared half-bridge and the plurality of secondary half-bridges, generate a plurality of control signals each for application to a half-bridge of the plurality of secondary half-bridges, calculate a phase displacement for each of the plurality of control signals, determine a maximum current through the half-bridge independent of an orientation of the phase displacement for each of the plurality of control signals, and adjust the orientation of the phase displacement for each of the plurality of control signals to reduce the maximum current.

According to one aspect, each control signal is a pulse-width modulated (PWM) signal representative of the switching frequency, wherein the PWM signal for the shared half-bridge defines a rising edge of a pulse of the PWM signal.

According to one aspect, the orientation includes one of a time-shift ahead and a time-shift delay from the rising edge.

According to one aspect, the plurality of resonant loads is a first resonant load and a second resonant load, and the control circuitry is configured to shift a first control signal ahead of the rising edge and a second control signal behind the rising edge.

According to one aspect, the plurality of secondary half-bridges is a first half-bridge and a second half-bridge each including a high-side secondary switch and a low-side secondary switch, and the shared half-bridge includes a primary high-side switch and a primary low-side switch.

According to one aspect, the control circuitry is configured to, in response to determining that the target power levels are equal, offset activation of the high-side secondary switch of the first half-bridge relative to activation of the high-side secondary switch of the second half-bridge.

According to one aspect, the control circuitry is configured to select from a plurality of orientation patterns a target orientation pattern for the plurality of control signals to provide a lowest current peak to achieve the plurality of target power levels at the switching frequency.

According to one aspect, each of the plurality of secondary half-bridges cooperates with the shared half-bridge to form a plurality of full-bridge inverters.

According to one aspect, a system for controlling an induction cooking apparatus includes a plurality of resonant loads each having an induction coil of said induction cooking apparatus, switching circuitry including a shared half-bridge, and a plurality of secondary half-bridges each cooperating with the shared half-bridge to form a plurality of full-bridge inverters, wherein each of the plurality of full-bridge inverters is configured to selectively power a resonant load of the plurality of resonant loads. Control circuitry configured is to calculate a switching frequency common to the shared half-bridge and the plurality of secondary half-bridges, generate a plurality of control signals each for application to a half-bridge of the plurality of secondary half-bridges, calculate a phase displacement for each of the plurality of control signals, determine a maximum current through the half-bridge independent of an orientation of the phase displacement for each of the plurality of control signals, and adjust the orientation of the phase displacement for each of the plurality of control signals to reduce the maximum current.

According to one aspect, the control circuitry is configured to apply the plurality of control signals.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes, and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A system for controlling an induction cooking apparatus (10), comprising:
a plurality of resonant loads (11, 11a, 11b) each having an induction coil (12, 12a, 12b) of said induction cooking apparatus (10);
switching circuitry (13) including a shared half-bridge (14) and a plurality of secondary half-bridges (16, 16a, 16b) each cooperating with the shared half-bridge (14) to form a plurality of full-bridge inverters, wherein each of the plurality of full-bridge inverters is configured to selectively power a resonant load (11, 11a, 11b) of the plurality of resonant loads (11, 11a, 11b); and
control circuitry configured to:
determine a plurality of target power levels including a target power level for each one of the plurality of resonant loads (11, 11a, 11b);
compare the plurality of target power levels;
calculate a switching frequency common to the shared half-bridge (14) and the plurality of secondary half-bridges (16, 16a, 16b) based on the comparison of the target power levels;
generate a plurality of control signals each for application to a half-bridge of the plurality of secondary half-bridges (16, 16a, 16b);
calculate a phase displacement for each of the plurality of control signals;
determine a maximum current through the shared half-bridge (14) independent of an orientation of the phase displacement for each of the plurality of control signals; and
adjust the orientation of the phase displacement for each of the plurality of control signals to reduce the maximum current.

2. The system of claim 1, wherein each control signal is a pulse-width modulated (PWM) signal representative of the switching frequency, and wherein the PWM signal for the shared half-bridge (14) defines a rising edge (96) of a pulse of the PWM signal to the shared half-bridge (14).

3. The system of claim 2, wherein the orientation includes one of a time-shift ahead and a time-shift delay from the rising edge (96).

4. The system of either one of claims 2 or 3, wherein the plurality of resonant loads (11, 11a, 11b) is a first resonant load (11a) and a second resonant load (11b), and wherein the control circuitry is configured to shift a first control signal ahead of the rising edge and a second control signal behind the rising edge (96).

5. The system of any one of claims 1-4, wherein the plurality of secondary half-bridges (16, 16a, 16b) is a first half-bridge (16a) and a second half-bridge (16b) each including a high-side secondary switch (76) and a low-side secondary switch (78).

6. The system of claim 5, wherein the shared half-bridge (14) includes a primary high-side switch (72) and a primary low-side switch (74).

7. The system of either one of claims 5 or 6, wherein the secondary switches (76, 78) are IGBTs and the control circuitry includes a controller (24) that controls the IGBTs via the control signals to adjust the orientation of at least some of the phase displacements.

8. The system of any one of claims 1-7, wherein the control circuitry is configured to:
select from a plurality of orientation patterns a target orientation pattern for the plurality of control signals to provide a lowest current peak to achieve the plurality of target power levels at the switching frequency.

9. The system of any one of claims 1-8, further comprising:
a shared node (35) electrically connecting each of the plurality of resonant loads (11, 11a, 11b) to the shared half-bridge (14).

10. The system of any one of claims 1-9, wherein calculation of the switching frequency includes identifying an operating frequency for the highest target power level and assigning the operating frequency to the switching frequency.

11. The system of any one of claims 1-10, wherein the control circuitry is configured to apply the plurality of control signals.

12. The system of any one of claims 5-7, wherein the control circuitry is configured to:
in response to determining that the target power levels are equal, offset activation of the high-side secondary switch (76) of the first half-bridge (16a) relative to activation of the high-side secondary switch (76) of the second half-bridge (16b).
